# EUROPÄISCHE PATENTSCHRIFT

(11) **EP 0 962 666 B1**
(45) Veröffentlichungstag und Bekanntmachung des Hinweises auf die Patenterteilung: **28.11.2001**
(21) Anmeldenummer: 99116734.7
(22) Anmeldetag: 27.08.1997
(51) Int. Cl.: F16B 37/04

(54) **Kunststoffmutter**
Plastic nut
Ecrou en matiere plastique

(30) Priorität: 25.09.1996 DE 19639396; 07.07.1997 DE 19728988
(43) Veröffentlichungstag der Anmeldung: 08.12.1999
(62) Teilanmeldung aus: 97944799.2
(73) Patentinhaber: EJOT VERBINDUNGSTECHNIK GmbH & Co. KG, D-57334 Bad Laasphe (DE)
(72) Erfinder: König, Gottfried, 57334 Bad Laasphe (DE); Weitzel, Stephan, 57334 Bad Laasphe (DE)
(74) Vertreter: Bardehle, Heinz, Dipl.-Ing.

(56) Entgegenhaltungen:
- WO-A-87/01419
- DE-A- 2 928 619
- US-A- 3 534 797
- US-A- 3 701 302

## Beschreibung

Die Erfindung bezieht sich auf eine Kunststoffmutter mit einer Aufhahmebohrung zum Eindrehen einer selbstfurchenden Schraube.

Der Erfindung liegt die Aufgabe zugrunde, die Kunststoffmutter hinsichtlich der Aufnahme der Schraube günstig zu gestalten, das heißt, der Schraube zunächst eine Führung zu geben und ihr Eindrehen zu erleichtern.

Erfindungsgemäß geschieht dies dadurch, daß die Aufnahmebohrung einen Durchgangsbereich bildet und einen daran anschließenden engeren Bereich aufweist, der einen das Eindrehen der selbstfurchenden Schraube ermöglichenden Durchmesser besitzt, wobei die Aufnahmebohrung an ihrem Übergang zu ihrem engeren Bereich über eine gewindeartige Schräge eine oder mehrere Stufen bildet.

Aufgrund dieser Gestaltung gestattet es die Aufnahmebohrung, zunächst über ihre das Durchgangsloch bildende Länge die Schraube aufzunehmen, die somit für den nachfolgenden Eindrehvorgang geführt ist. Der sich an das Durchgangsloch anschließende engere Bereich ist dann für die Aufnahme des Gewindes der Schraube vorgesehen. Hierzu besitzt der engere Bereich einen solchen Durchmesser, daß er das Eindrehen einer selbstfurchenden Schraube ermöglicht. Das Eindrehen der Schraube in den engeren Bereich wird dann durch die gewindeartige Schräge mit ihrer Stufe erleichtert, in die sich die Schraube leicht eindrehen läßt.

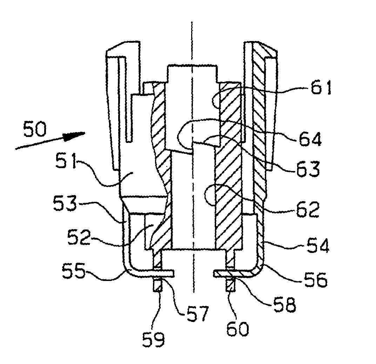

Ein Ausführungsbeispiel der Erfindung ist in der Figur dargestellt, in der eine Kunststoffmutter zur Anbringung an plattenartigen Bauteilen unterschiedlicher Dicke mit der erfindungsgemäßen Gestaltung ihrer Aufnahmebohrung dargestellt ist.

In der Figur ist eine Kunststoffmutter 50 dargestellt, mit der der Zusammenhalt zwischen einem Flanschteil 51 und einem Mutterteil 52 herbeigeführt wird. Die grundsätzliche Gestaltung der Kunststoffmutter 50 entspricht derjenigen gemäß den Figuren der PCT-Anmeldung WO 98/13 607, deren diesbezüglicher Inhalt in die vorliegende Anmeldung inkorporiert wird. Bezüglich des Zusammenwirkens von Flanschteil 51 und Mutterteil 52 kann daher auf die Erläuterungen zu den vorstehend genannten Figuren verwiesen werden. Gemäß der Figur bilden die elastischen Bänder 53, 54 eine Art Haken, der aus dem unteren Ende des Flanschteiles 51 herausragt und radial nach innen zu abgebogen ist. Die jeweilige Abbiegung 55, 56 ragt jeweils in ein Loch 57, 58 hinein, das in einem Arm 59, 60 ausgebildet ist. Die Arme 59, 60 ragen von dem Mutterteil 52 weg und bilden mit ihren Löchern 57, 58 Aufnahmen für die Abbiegungen 55, 56 der elastischen Bänder 53, 54. Die Kunststoffmutter 50 besteht aus zwei einzeln spritzbaren Teilen, die dadurch zusammengefügt werden, daß beim Einrühren des Mutterteiles 52 in das das Mutterteil 52 hülsenartig umgebenden Flanschteil 51 die Abwinkelungen 55, 56 zunächst nach außen weggebogen werden, bis die Abwinkelungen den Löchern 57, 58 gegenüberstehen, woraufhin man die Abwinkelungen 57, 58 in die genannten Löcher einschnappen läßt, was aufgrund der Elastizität der Bänder 53, 54 ohne weiteres möglich ist. Für die beim Anbringen der Kunststoffmutter 50 erforderliche Verschiebbarkeit des Mutterteiles 52 gegenüber dem Flanschteil 51 geben dann die Bänder 53, 54 mit ihren Abwinkelungen 55, 56 den notwendigen Spielraum her, so daß die Kunststoffmutter 50 in der gleichen Weise an einem Bauteil angebracht werden kann, wie dies oben insbesondere im Zusammenhang mit den Figuren der PCT-Anmeldung beschrieben ist.

In der Figur ist eine Stufe 64 in der Aufnahmebohrung des Mutterteiles 52, bestehend aus Durchgangsloch 61 und engerer Bereich 62, dargestellt, die dadurch entsteht, daß im Bereich des Überganges von Durchgangsloch 61 zum engeren Bereich 62 gewindeartige Schrägen 63 gebildet sind, wodurch das Eindringen des ersten Gewindeganges einer einzudrehenden Schraube in den engeren Bereich 62 wesentlich erleichtert wird.

## Patentansprüche

1. Kunststoffmutter (50) mit einer Aufnahmebohrung zum Eindrehen einer selbstfurchenden Schraube, **dadurch gekennzeichnet, daß** die Aufnahmebohrung einen Durchgangsbereich (61) bildet und einen daran anschließenden engeren Bereich (62) aufweist, der einen das Eindrehen der selbstfurchenden Schraube ermöglichenden Durchmesser besitzt, wobei die Aufnahmebohrung an ihrem Übergang zu ihrem engeren Bereich (62) über eine gewindeartige Schräge (63) eine oder mehrere Stufen (64) bildet.

## Claims

1. Plastic nut (50) having a receiving bore into which a self-tapping screw can be screwed, **characterized in that** the receiving bore forms a through-passage region (61) and has an adjoining, narrower region (62) which has a diameter which allows the self-tapping screw to be screwed in, the receiving bore forming at its transition to its narrower region (62) via a thread-like slope (63) one or more steps (64).

## Revendications

1. Écrou - en matière plastique (50) comportant un perçage de réception pour le vissage d'une vis autotaraudeuse, **caractérisé en ce que** le perçage de réception forme une zone de traversée (61) et possède une zone plus étroite (62), qui se raccorde à cette zone et qui possède un diamètre permettant le vissage de la vis autotaraudeuse, le perçage de réception formant un ou plusieurs épaulements (64) au niveau de sa jonction avec sa zone plus étroite (62), par l'intermédiaire d'une partie oblique (63) en forme de filetage.
